# DEMANDE DE BREVET EUROPEEN

(11) **EP 1 280 328 A2**
(43) Date de publication de la demande: **29.01.2003**
(21) Numéro de dépôt: 02077839.5
(22) Date de dépôt: 15.07.2002
(51) Int. Cl.: H04M 11/00

(54) **Appareil de téléphonie comportant des moyens de surveillance**

(30) Priorité: 20.07.2001 FR 0109751
(71) Demandeur: Koninklijke Philips Electronics N.V., 5621 BA Eindhoven (NL)
(72) Inventeur: Coutant, François, 75008 Paris (FR)
(74) Mandataire: Chaffraix, Jean

(57) **Abrégé**

Cet appareil (1) comporte des moyens de surveillance pour un environnement (2). Ces moyens sont une partie intégrante d'un radiotéléphone mobile, par exemple. Ainsi si un événement se produit une communication téléphonique se produit pour un autre appareil téléphonique (5). Depuis l'appareil (5), il devient possible d'écouter ce qu'il se passe dans l'environnement (2). Selon un mode de réalisation, la mise en communication se produit périodiquement et selon un autre mode, cette mise en communication se produit dès qu'un bruit trop intense se produit dans cet environnement.

Application : surveillance de jeunes enfants.

## Description

L'invention concerne un appareil de téléphonie comportant des moyens de surveillance, muni de circuits de commande.

L'invention trouve d'importantes applications notamment en ce qui concerne la surveillance des enfants en bas âge.

Un tel appareil est connu du document allemand DE 200 07 647 U. Cet appareil permettant la surveillance de jeunes enfants se compose d'un appareil de téléphonie auquel on a ajouté du matériel pour cette surveillance.

La présente invention propose un appareil du genre mentionné dans le préambule qui évite la présence de ce matériel ajouté.

Pour cela, un tel appareil est remarquable en ce que ces moyens de surveillance sont partie intégrante desdits circuits de commande électronique comportant un circuit de surveillance.

Selon un mode de réalisation préféré de l'invention, un tel appareil est remarquable en ce qu'il comporte des moyens pour éviter les appels qui lui sont destinés.

Ainsi, selon ce mode de réalisation l'enfant à surveiller n'est pas importuné par un appel concernant l'appareil.

La description suivante, faite en regard des dessins ci-annexés, le tout donné à titre d'exemples non limitatifs fera bien comprendre comment l'invention peut être réalisée. Sur les dessins :
La figure 1 montre un appareil conforme à l'invention, disposé à proximité d'un jeune enfant à surveiller.
La figure 2 montre l'écran de l'appareil pour configurer les circuits de commande de surveillance.
La figure 3 montre un ordinogramme explicitant un premier mode de fonctionnement de l'appareil.
La figure 4 montre un ordinogramme explicitant un deuxième mode de fonctionnement de l'appareil.

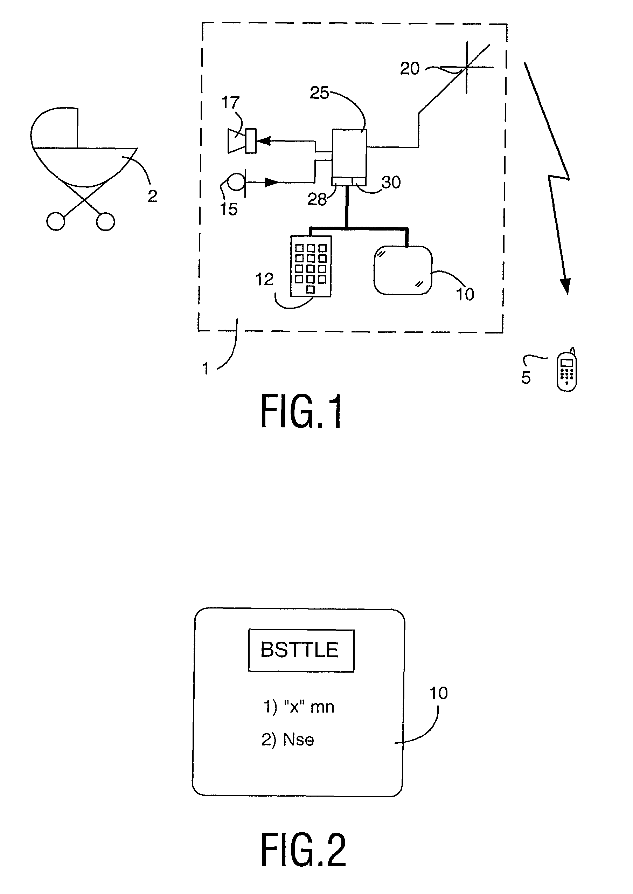

A la figure 1, l'appareil porte la référence 1. Il est donc placé à proximité d'un berceau 2 dans lequel se trouve un jeune enfant qu'il faut surveiller. Si celui-ci manifeste du mécontentement par des cris, ceci est détecté par l'appareil 1 qui transmet ceci à un autre appareil 5, situé dans un environnement proche de ses parents, par exemple.

L'appareil 1 est un radiotéléphone mobile normal et se compose d'un écran 10, d'un clavier 12, d'un microphone 15 et d'un haut-parleur écouteur 17. Une antenne 20 permet de propager les ondes émises et d'en recevoir. Tous ces éléments sont reliés à un ensemble de télécommunication 25. Le fonctionnement de cet ensemble est sous la dépendance de circuits de commande 28 coopérant avec une mémoire 30.

Selon une caractéristique de l'invention, on propose plusieurs modes de surveillance. Ces modes peuvent être mis en oeuvre par activation d'items montrés sur l'écran 10. Ceci est représenté à la figure 2.

Parmi les menus de commande, on fait apparaître celui qui concerne la surveillance par exemple le menu référencé par BSTTLE. Sous ce menu deux items sont visualisés :
- 1) "x" mn
- 2) Nse.

L'item 1, qui peut être activé en appuyant sur la touche portant le chiffre 1 du clavier 12, déclenche une surveillance automatique. C'est-à-dire que toutes les "x" minutes, une communication s'établit entre l'appareil 1 et l'appareil 5. Pour établir ce premier mode l'utilisateur a besoin de définir le temps "x" entre deux appels et aussi le numéro d'appel du deuxième appareil. Il est possible aussi de définir d'autres numéros au cas où le premier serait occupé ou indisponible. Le numéro ou les numéros d'appel sont enregistrés dans un emplacement de la mémoire 30.

L'item 2 est activé d'une façon semblable à celle du précédent, en appuyant sur la touche portant le chiffre 2 du clavier 12. En fait, l'utilisateur n'a qu'à rentrer le ou les numéros de l'appareil à appeler.

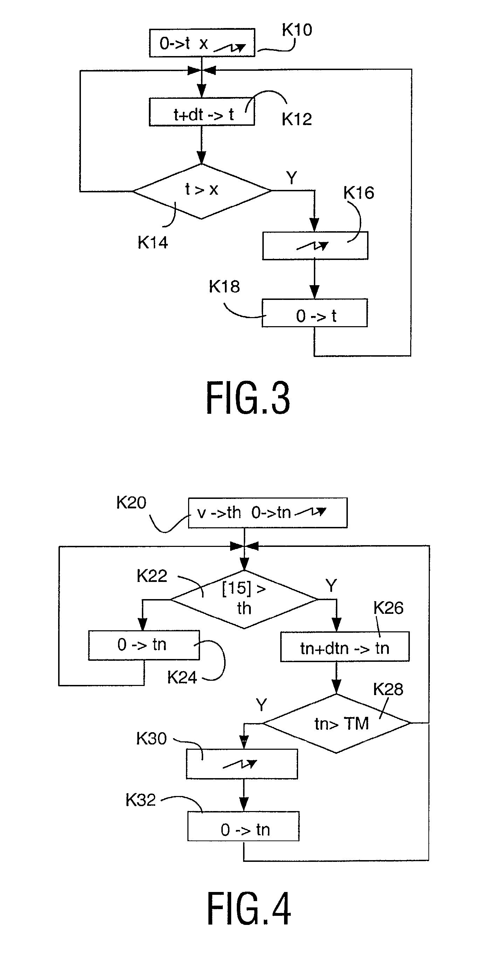

La figure 3 illustre, par un ordinogramme, le fonctionnement du premier mode. Sur cet ordinogramme la case K10 représente une étape d'initialisation. Dans cette étape un compteur de temps "t" est initialisé ainsi que la période "x" des appels. Les numéros à appeler sont aussi enregistrés dans l'emplacement de mémoire 30. La case K12 montre l'incrémentation du compteur de temps "t". Le contenu de ce compteur est testé à la case K14. Si ce contenu est inférieur à "x" on retourne à la case K12 pour une incrémentation supplémentaire après un certain laps de temps. Si le contenu du compteur "t" excède la valeur x, alors l'appel est déclenché à la case K16 pour mettre en relation les deux appareils 1 et 5. Ainsi, il est possible depuis l'appareil 5 d'écouter ce qu'il se passe dans l'environnement du berceau 2, voire de communiquer avec l'enfant. La communication terminée, on passe à la case K18 où le compteur "t" est re-initialisé avant de passer à la case K12.

La figure 4 illustre, par un ordinogramme, le fonctionnement du deuxième mode. Sur cet ordinogramme la case K20 représente une étape d'initialisation. Dans cette étape un compteur de temps "tn" est initialisé ainsi qu'une valeur de seuil pour le microphone 15 pour laquelle on estime que l'enfant à surveiller manifeste par des pleurs un certain mécontentement. En outre une valeur de temps TM est entrée. Cette valeur donne la durée pour qu'un bruit qui excède la valeur de seuil soit considéré comme une manifestation significative de l'enfant. Les numéros à appeler sont aussi enregistrés dans l'emplacement de mémoire 30. La case K22 montre le test sur le niveau reçu par le microphone 15. Si celui-ci est inférieur à la valeur th le compteur "tn" est mis à zéro, case K24. Si ce contenu excède cette valeur, alors on incrémente la valeur de ce compteur tn ( case K26). Cette valeur est testée ensuite à la case K28. Si elle est inférieure à la valeur TM, on repasse à la case K26 pour un nouveau test du signal de sortie du microphone 15. Si la durée du bruit dépassant la valeur "th" a dépassé la valeur TM alors on effectue la connexion des appareils 1 et 5, case K30. La connexion terminée on revient à la case K22 après avoir re-initialisé le compteur "tn", case K32, pour un nouveau cycle de surveillance.

Pour éviter que l'enfant à surveiller soit perturbé ou réveillé par un appel entrant, le fait de valider un des deux modes de fonctionnement empêche ces appels entrants de faire retentir les signaux sonores d'appel émis par le haut-parleur 17.

Bien que la description ait été faite dans le cadre de la surveillance d'un jeune enfant, l'invention trouve aussi des applications dans d'autres domaines de surveillance, notamment où le bruit manifesté indique une anomalie surtout pour le deuxième mode. Le premier mode donne une surveillance périodique pour surveiller n'importe quel processus.

## Revendications

1. Appareil de téléphonie comportant des moyens de surveillance, muni de circuits de commande, **caractérisé en ce que** ces moyens de surveillance sont partie intégrante desdits circuits de commande.

2. Appareil selon la revendication 1, **caractérisé en ce qu'**il est du type téléphone mobile cellulaire.

3. Appareil selon la revendication 1 ou 2, **caractérisé en ce qu'**il est prévu une option de désactivation d'appels entrants dans lesdits circuits de commande.

4. Appareil selon l'une des revendications 1 à 3 comportant un capteur de son, **caractérisé en ce que** lesdits circuits de commande établissent un appel à un numéro d'appel contenu dans une mémoire rattachée aux circuits de commande pour un signal issu du capteur de son dépassant un certain seuil.

5. Appareil selon l'une des revendications 1 à 4, **caractérisé en ce que** lesdits circuits de commande établissent un appel à un numéro d'appel contenu dans une mémoire rattachée aux circuits de commande à des instants prédéfinis par des informations contenues dans une mémoire.

6. Appareil selon l'une des revendications 1 à 4, **caractérisé en ce que** les moyens de surveillance comportent un compteur de temps pour déterminer une durée significative du bruit détecté par le capteur de son avant d'établir ledit appel.

7. Appareil selon les revendications 5 et 6 considérées ensemble.
